# EUROPEAN PATENT APPLICATION

(11) **EP 2 343 589 A1**
(43) Date of publication of application: **13.07.2011**
(21) Application number: 10150130.2
(22) Date of filing: 05.01.2010
(51) Int. Cl.: G02B 27/22, G03B 21/60

(54) **Improvements in depth-enhancing screens**

(71) Applicant: Realview Innovations Limited, County Roscommon (IE)
(72) Inventor: Braithwaite, John, Dalserf ML9 3BN (GB); Ansbro, Eamonn, Co. Roscommon (IE); Ansbro, Catherine, Co. Roscommon (IE)
(74) Representative: O'Neill, Aoife

(57) **Abstract**

The present invention relates to depth-enhancing screens for producing a simulated 3D image. According to one aspect of the invention, the depth-enhancing screen comprises a Fresnel lens and the screen is adapted to be arranged adjacent an image source such that the Fresnel lens is arranged between the image source and a viewer and the optical centre of the Fresnel lens is offset from the optical centre of the image source. According to another aspect of the invention, the depth-enhancing screen comprises a Fresnel lens, having a lensed side and a non-lensed side and the screen is adapted to be arranged adjacent an image source such that the Fresnel lens is arranged between the image source and a viewer with the lensed side oriented towards the viewer. According to a further aspect of the invention, the depth-enhancing screen comprises a multi-curved Fresnel lens which when viewed in cross-section along the or each longest line linking two points on the edge of the lens, has a curved cross-section with an apex in a central region of the lens, wherein the screen is adapted to be arranged adjacent an image source such that the Fresnel lens is arranged between the image source and a viewer and such that the curvature of the lens is concave towards the viewer.

## Description

### Field of the Invention

The present invention relates to depth-enhancing screens for producing an image having enhanced depth or a simulated three-dimensional effect.

### Background to the Invention

Depth perception is the visual ability to perceive the world in three dimensions. Humans (and other animals) use a variety of monocular cues (that is, cues available from the input of just one eye) and binocular cues (that is, cues that require input from both eyes) to perceive depth.

Motion parallax is a type of monocular cue which affects depth perception. When an observer moves, the apparent relative motion of several stationary objects against a background gives hints about their relative distance. These subtle movements by the observer work in the real world for providing a better understanding of depth. However, when viewing images on a flat television or computer screen, such movements will not facilitate depth perception because there is no relative motion between objects shown in the two-dimensional image.

Stereopsis or retinal disparity is a type of binocular cue which affects depth perception. Information derived from different projection of objects on to each retina is used to judge depth. By using two images of the same scene obtained from slightly different angles, it is possible for the brain to calulate the distance to an object. If the object is far away, the retinal disparity will be small. On the other hand, if the object is close, the retinal disparity will be large. Again, this effect works in the real world to give a viewer a better understanding of depth, but does not work with a flat two dimensional screen because all objects on the screen appear to be at the same distance from the viewer.

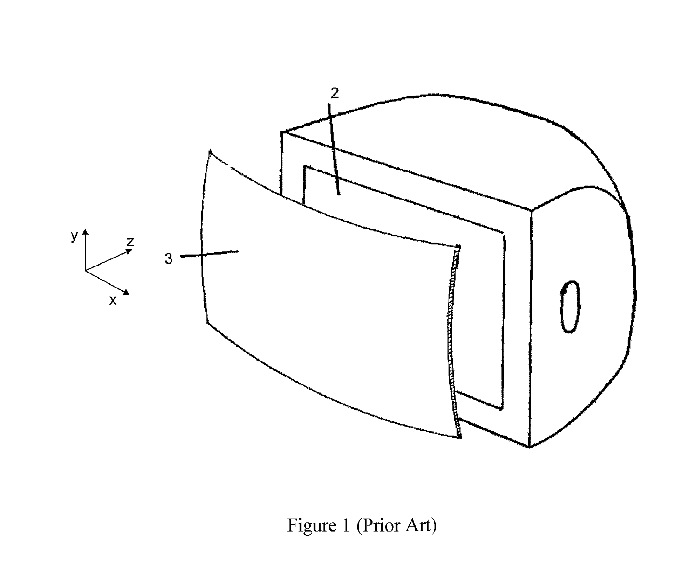

Stereoptic effect may, however, be used to "trick" the brain into perceiving depth in a two dimensional image, such as a "Magic Eye" picture or a stereoscopic photo. Similarly, stereoptic effect may be used to produce a simulated three-dimensional image (that is, an image having depth cues) from a two-dimensional image such as an image on a flat television or computer screen, as described in our European Patent Application Publication No. EP1 636 631. This document describes an apparatus comprising a flexible Fresnel lens curved in two transverse directions so as to create a substantially convex lens. The apparatus may be mounted, for example, in front of a television screen or computer monitor 2 as shown in Figure 1 to produce a simulated three-dimensional image of the two-dimensional image displayed on the screen. The Fresnel lens 3 is spaced apart from the screen 2 and is curved in a first plane (the x-z plane) and a second plane (the y-z plane) so as to form a Fresnel lens having two planes of curvature. As shown in the drawing, if a cross-section of the lens were taken in the x-z plane, the cross-section of the lens would be curved or arcuate in shape across its entire width. Similarly, if a cross-section were taken in the y-z plane, the cross-section would also be curved or arcuate in shape. As the x- and y-planes are, by definition, orthogonal to one another, there are thus two orthogonal planes in which the lens is arcuate in cross-section. The Fresnel lens may be flexible and positioned within a mount configured with adjustable tensioning members so as to tune the optical characteristics of the Fresnel lens so as to optimise production of the simulated three-dimensional image. Because the Fresnel lens is curved in two transverse planes, slightly different images are received by the left and right eyes of the viewer, producing a stereoptic effect, which is interpreted by the brain so that the image appears to have depth, that is, the image appears more three-dimensional than would otherwise be the case.

Our European Patent Application Publication No. 2 048 522 describes a depth-enhancing screen for producing a simulated 3D image, comprising a multi-curved Fresnel lens which when viewed in cross-section along the or each longest line linking two points on the edge of the lens, has a curved cross-section with an apex in the central region of the lens, and wherein each end of the curve flattens before it reaches the edge of the lens.

However, a disadvantage associated with the depth-enhancing screens as described in each of the above-referenced documents is that the curved Fresnel lens may cause reflections which cause a deterioration of the image quality as perceived by the viewer. The present invention is directed to overcoming, or at least reducing the effects of, reflection caused by the curved Fresnel lens.

A further disadvantage relates to the use of the depth-enhancing screens described above with small image sources or screens. With small image sources, the enhanced effect may be minimal, or even absent where the width of the source screen is smaller than the viewer's inter-pupillary distance. The present invention is also directed to improving the effect of depth perception for small image sources.

### Summary of the Invention

According to an aspect of the invention, there is provided a depth-enhancing screen for producing a simulated 3D image, comprising:
a Fresnel lens;
**characterised in that** the screen is adapted to be arranged adjacent an image source, such that the Fresnel lens is arranged between the image source and a viewer and the optical centre of the Fresnel lens is offset from the geometric centre or optical axis of the image source.

As is well known in the art, a Fresnel lens is smooth on one side ("unlensed side") and comprises a plurality of grooves and ridges on the other side ("lensed side"). The grooved or lensed side of a Fresnel lens comprises a plurality of circular or part circular grooves, such that the grooves share a common centre of origin. The optical centre of a Fresnel lens is defined as the point of centricity of the grooves which make up the Fresnel lens.

This arrangement is particularly advantageous for small images sources, such as small LCD or LED screens on mobile telephones, personal digital assistants, personal game consoles etc. The term "small" is used herein to refer to image sources that have at least one dimension which is shorter than the inter-pupillary distance of the viewer. Typical inter-pupillary distance for adults is around 54 to 68 mm, while measurements generally fall between 48 and 73 mm. For children the measurement usually ranges from 41 to 55 mm. The present invention therefore has application in screens having at least one dimension of about 70 mm or less. Offsetting the optical centre of the Fresnel allows the left and right eyes of the viewer to receive rays that are further apart than they would otherwise be, thereby enhancing the perception of depth in the image. This arrangement is also useful in reducing reflections from the depth-enhancing screen.

In one embodiment, the optical centre of the Fresnel lens is offset from the geometric centre of the Fresnel lens, that is, the optical centre of the Fresnel lens is not co-incident with its geometric centre. The offset may be introduced during manufacture of the lens. For example, the lens may be cut so that its optical axis is offset from its geometric centre. In other embodiments, the tool or mould used to manufacture the Fresnel lens may be adapted such that the optical centre of the manufactured lens is offset from its geometric centre. Alternatively, or additionally, the Fresnel lens may be mounted in a frame for attachment to the image source, such that the optical centre of the lens is offset from the geometric centre of the frame.

In an embodiment, the depth-enhancing screen comprises a plurality of Fresnel lenses, wherein the screen is adapted to be arranged adjacent the image source such that each of the plurality of Fresnel lenses is arranged between the image source and the viewer and the optical centre of at least one of the Fresnel lenses is offset from the geometric centre of the image source.

The optical centre of two or more of the Fresnel lenses may be offset from the geometric centre of the image source by the same distance. Alternatively, the optical centre of each of the Fresnel lenses may be offset from the geometric centre of the image source by a different distance. The optical centre of each of the Fresnel lenses may be offset from the geometric centre of the image source in a different direction.

According to one embodiment of the depth-enhancing screen the Fresnel lens is a multi-curved Fresnel lens which when viewed in cross-section along the or each longest line linking two points on the edge of the lens, has a curved cross-section with an apex in a central region of the lens; and the optical centre of the Fresnel lens is offset from the apex in the central region of the lens. The term "longest line" when used herein is intended to mean the longest straight line on the surface of the lens when the lens is flat.

Properties of the Fresnel lens, such as size, focal length and groove pitch may be selected based on the intended application of the particular depth-enhancing screen. The optimal magnitude of the offset may be determined based on the size of the Fresnel and the intended application. Optimal offsets are typically between 0.1% and 3% of the width (or diameter) of the Fresnel lens. The optimal offset decreases as the size of the selected Fresnel lens increases. Typically, the offset may be of the order of 10 to 20 grooves. Thus, the magnitude of the offset depends on the number of grooves per millimetre in the selected lens (groove pitch).

According to another aspect of the invention, there is provided a depth-enhancing screen for producing a simulated 3D image, comprising:
a Fresnel lens, having a lensed side and a non-lensed side;
**characterised in that** the screen is adapted to be arranged adjacent an image source, such that the Fresnel lens is arranged between the image source and a viewer with the lensed side oriented towards the viewer.

One advantage associated with this arrangement is that it reduces reflections from the depth-enhancing screen, thereby improving the quality of the image seen by the viewer. A further advantage of this arrangement is that the viewing angle of the depth-enhancing screen, that is, the angle at which the viewer may perceive the depth-enhanced effect, is increased as compared with existing screens.

The depth-enhancing screen may comprise a plurality of Fresnel lenses, wherein one or more of the lenses is arranged such that the lensed (grooved) side is oriented towards the viewer.

According to another aspect of the invention, there is provided a depth-enhancing screen for producing a simulated 3D image, comprising:
a multi-curved Fresnel lens which when viewed in cross-section along the or each longest line linking two points on the edge of the lens, has a curved cross-section with an apex in a central region of the lens;
**characterised in that** the screen is adapted to be arranged adjacent an image source, such that the Fresnel lens is arranged between the image source and a viewer and such that the curvature of the lens is concave towards the viewer, that is, the central portion of the lens curves away from the viewer.

One advantage associated with this arrangement is that it reduces reflections from the depth-enhancing screen, thereby improving the quality of the image seen by the viewer. A further advantage of this arrangement is that the viewing angle of the depth-enhancing screen, that is, the angle at which the viewer may perceive the depth-enhanced effect, is increased as compared with existing screens.

The depth-enhancing screen may further comprise means for adjusting the curvature of the Fresnel lens, wherein adjusting the curvature of the lens varies the amount of depth-enhancement experienced by the viewer and the viewing angle at which the depth-enhancement may be perceived. The Fresnel lens may be formed from a flexible material, such that the curvature of the lens may be adjusted or tuned.

According to several aspects of the invention set out above, there is provided a depth-enhancing screen comprising a multi-curved Fresnel lens which when viewed in cross-section along the or each longest line linking two points on the edge of the lens, has a curved cross-section with an apex in a central region of the lens. In embodiments of the invention, each end of the curve flattens before it reaches the edge of the lens. The term "flattens" when used herein is intended to mean approaching but not necessarily reaching flat, although the edge of the lens may reach flat. Preferably the ends of the curved cross-section are curved, but the degree of curvature of the cross-sectional curve decreases towards the ends, i.e. the radius of curvature at the ends is less that the radius of curvature approaching the apex. Preferably the difference in the degree of curvature is considerable.

In these embodiments of the invention, the lens may have a curved cross-section when viewed in cross-section along a second line substantially perpendicular to the longest line, the second curve having an apex in the central region of the lens. Each end of the second curve may flatten before it reaches the edge of the lens. For example, the Fresnel lens may be oval in shape when flat wherein the longest line is the oval's major axis and the second line is the oval's minor axis.

It will be appreciated that, in these embodiment, the Fresnel lens therefore has at least two primary curvatures, wherein the primary curvatures are arranged such that there are at least two planes transverse to one another in which the cross section of the Fresnel lens is arcuate in shape.

The primary curvatures in the lens are arranged such that there are two intersecting or transverse planes in which the lens has an arcuate or curved cross-section. These planes may be orthogonal (or substantially orthogonal), that is, at right angles to one another. There may be several transverse or intersecting planes in which the lens has a curved cross-section. The primary curvatures may be arranged in a similar manner as described above with reference to Figure 1.

The surface of the lens may be described as substantially dome or "cushion" shaped, depending on the number of primary curvatures introduced. As an example, in one embodiment where the lens is square in shape when flat, the centre or central region of the lens lies in a first plane (parallel to the x-y plane shown in Figure 1), with the corner regions of the lens lying in a common second plane, parallel to but spaced apart from the first plane. Each edge of the lens is therefore curved, with the apex equidistant between the two corners. The apex of the edge lies in a third plane, parallel to but lying between the first and second planes. The unconstrained corners of the lens may lie in the second plane or may lie in a further parallel plane.

### Brief Description of the Drawings

Fig. 1 is a perspective view of a prior art optical system showing a two-axis curvature of a Fresnel lens;
Figure 2 is a perspective view of a depth-enhancing screen according to an embodiment of the present invention; and
Figure 3 is a side cross-sectional view of the depth-enhancing screen of Figure 2.

### Detailed Description of the Drawings

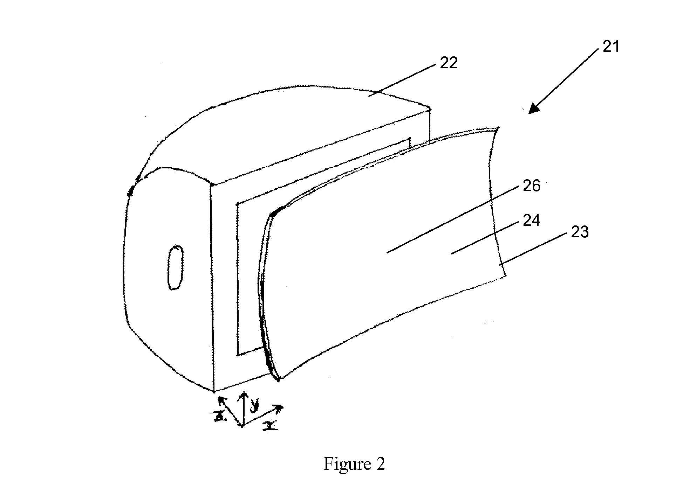

Referring to Figure 2 of the drawings, there is illustrated a depth-enhancing screen 21 according to an embodiment of the invention. As shown, the screen 21 may be mounted in front of an image source, for example, a television screen or computer monitor 22, to produce a simulated three-dimensional image of the two-dimensional image displayed on the television screen 22. The depth-enhancing screen 21 comprises a Fresnel lens 23, having a lensed (grooved) side 24 and a non-lensed (smooth) side 25. In the present embodiment, the Fresnel lens is arranged between the image source 22 and a viewer with the lensed side 24 oriented towards the viewer. Furthermore, the Fresnel lens 23 is a multi-curved Fresnel lens which when viewed in cross-section along the or each longest line linking two points on the edge of the lens, has a curved cross-section with an apex in a central region 26 of the lens. In the embodiment shown, the curvature of the lens is concave towards the viewer, that is, the central portion 26 of the lens curves away from the viewer.

According to various embodiments of the invention, the Fresnel lens 22 may be flexible and positioned within a mount configured with adjustable tensioning members so as to tune the optical characteristics of the Fresnel lens so as to optimise the viewing angle and the perception of depth by the viewer.

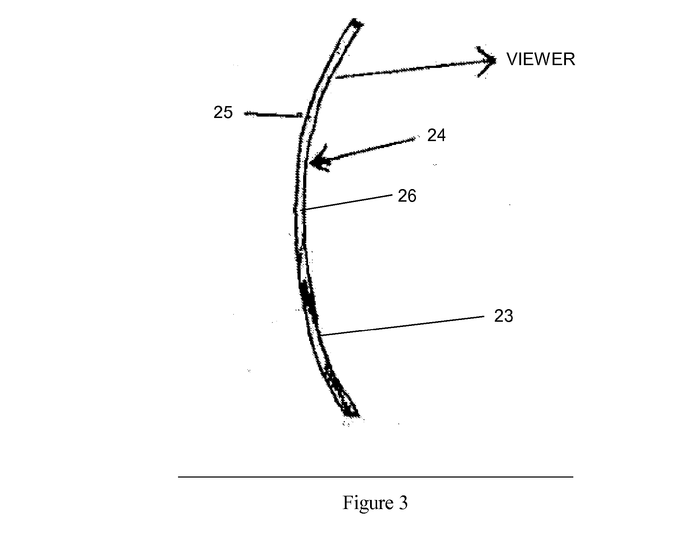

In Figure 4, there is illustrated a cross-section of the Fresnel lens 23 of the embodiment of Figure 3. As shown, the curvature of the lens is substantially uniform across the width of the lens. Figure 4 shows the curvature of the lens in a single plane only. As described above with reference to Figure 1, the lens is also curved in a transverse direction, so that a cross-section taken in a transverse plane has a similar cross-section.

In use, the depth-enhancing screen of the present invention is arranged in front of a display screen or other emissive image source, such as a television screen or a computer monitor. The lensed side of the Fresnel lens is directed towards the viewer and the smooth side of the Fresnel is directed towards the image source. The lens is concave towards the viewer. The images displayed on the television screen 22 are viewed through the depth-enhancing screen, so that the viewer perceives a three-dimensional or enhanced depth effect. Because the lensed side 24 of the Fresnel lens 23 is oriented towards the viewer, and the curvature of the lens in such that the lens is concave to the viewer, reflections from the screen are minimised and the viewing angle at which the effect may be experienced by the viewer is maximised.

In other embodiments, the optical centre of the Fresnel lens 23 may be offset from the geometric centre of the television or computer screen 22. For example, the optical centre of the lens 23 may be offset from the central region 26 of the lens. This is particularly useful for small computer screens, such as those found on handheld devices.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A depth-enhancing screen for producing a simulated 3D image, comprising:
a Fresnel lens;
wherein the screen is adapted to be arranged adjacent an image source such that the Fresnel lens is arranged between the image source and a viewer and the optical centre of the Fresnel lens is offset from the geometric centre of the image source.

2. A depth-enhancing screen as claimed in claim 1, wherein the optical centre of the Fresnel lens is offset from the geometric centre of the Fresnel lens.

3. A depth-enhancing screen as claimed in claim 1 or claim 2, comprising a plurality of Fresnel lenses, wherein the screen is adapted to be arranged adjacent the image source such that each of the plurality of Fresnel lenses is arranged between the image source and the viewer and the optical centre of at least one of the Fresnel lenses is offset from the geometric centre of the image source.

4. A depth-enhancing screen as claimed in claim 3, wherein the optical centre of two or more of the Fresnel lenses is offset from the geometric centre of the image source by the same distance.

5. A depth-enhancing screen as claimed in claim 3, wherein the optical centre of each of the Fresnel lenses is offset from the geometric centre of the image source by a different distance.

6. A depth-enhancing screen as claimed in any of claims 3 to 5, wherein the optical centre of each of the Fresnel lenses is offset from the geometric centre of the image source in a different direction.

7. A depth-enhancing screen as claimed in claim 1, wherein:
the Fresnel lens is a multi-curved Fresnel lens which when viewed in cross-section along the or each longest line linking two points on the edge of the lens, has a curved cross-section with an apex in a central region of the lens; and
wherein the optical centre of the Fresnel lens is offset from the apex in the central region of the lens.

8. A depth-enhancing screen as claimed in any preceding claim, wherein the Fresnel lens has a lensed side and a non-lensed side and the screen is adapted to be arranged such that the lensed side of the Fresnel lens is oriented towards the viewer.

9. A depth-enhancing screen for producing a simulated 3D image, comprising:
a Fresnel lens, having a lensed side and a non-lensed side;
wherein the screen is adapted to be arranged adjacent an image source such that the Fresnel lens is arranged between the image source and a viewer with the lensed side oriented towards the viewer.

10. A depth-enhancing screen as claimed in claim 9, wherein:
the Fresnel lens is a multi-curved Fresnel lens which when viewed in cross-section along the or each longest line linking two points on the edge of the lens, has a curved cross-section with an apex in a central region of the lens.

11. A depth-enhancing screen for producing a simulated 3D image, comprising:
a multi-curved Fresnel lens which when viewed in cross-section along the or each longest line linking two points on the edge of the lens, has a curved cross-section with an apex in a central region of the lens;
wherein the screen is adapted to be arranged adjacent an image source such that the Fresnel lens is arranged between the image source and a viewer and such that the curvature of the lens is concave towards the viewer.

12. A depth-enhancing screen as claimed in claim 11, wherein the Fresnel lens has a
lensed side and a non-lensed side and the screen is adapted to be arranged such that the lensed side of the Fresnel lens is oriented towards the viewer.

13. A depth-enhancing screen as claimed in claim 11 or claim 12, wherein the optical
centre of the Fresnel lens is offset from the apex in the central region of the lens.

14. A depth-enhancing screen as claimed in claim 7 or any of claims 10 to 13, further
comprising:
means for adjusting the curvature of the Fresnel lens, wherein adjusting the curvature of the lens varies the amount of depth-enhancement experienced by the viewer and the viewing angle at which the depth-enhancement may be perceived.
